# EUROPÄISCHE PATENTSCHRIFT

(11) **EP 4 205 545 B1**
(45) Veröffentlichungstag und Bekanntmachung des Hinweises auf die Patenterteilung: **11.09.2024**
(21) Anmeldenummer: 22000260.4
(22) Anmeldetag: 10.12.2022
(51) Int. Cl.: A01M 29/32

(54) **VORRICHTUNG UND ANORDNUNG ZUM BEFESTIGEN EINES VOGELABWEHRNETZES AN EINER FLÄCHE**
DEVICE AND ARRANGEMENT FOR ATTACHING A BIRD CONTROL NET TO A SURFACE
DISPOSITIF ET ARRANGEMENT POUR FIXER UN FILET ANTI-OISEAUX SUR UNE SURFACE

(30) Priorität: 04.01.2022 DE 202022000000 U
(43) Veröffentlichungstag der Anmeldung: 05.07.2023
(73) Patentinhaber: GSG Urbanguard GmbH, 16567 Muehlenbeck (DE)
(72) Erfinder: Wiesener, Mark, 16567 Mühlenbeck (DE)
(74) Vertreter: Hoffmann, Klaus-Dieter

(56) Entgegenhaltungen:
- DE-U1- 202007 004 171
- JP-A- 2000 210 003
- JP-B2- 6 764 146
- US-A1- 2016 255 829

## Beschreibung

### GEBIET DER ERFINDUNG

Die Erfindung betrifft eine Vorrichtung sowie eine Anordnung zum Befestigen eines Vogelabwehrnetzes an einer Fläche, beispielsweise einer Wand oder einer Fassade.

### HINTERGRUND DER ERFINDUNG

Es ist üblich, Vogelabwehrnetzte indirekt an Wänden oder Fassaden zu befestigen, indem zunächst Seildurchführungs-Ösen mittels Dübel in der Wand oder der Fassade im Abstand zu einander befestigt werden und dann ein Stahlrahmenseil durch die Ösen geführt wird, das mittels eines Seil-Spanners auf Spannung gebracht wird. Anschließend wird dann das Vogelabwehrnetz mittels Ringklammern Masche für Masche am Rahmenseil befestigt, was verhältnismäßig arbeits- und zeitaufwendig ist.

Eine weitere Vorrichtung zum Befestigen eines Vogelabwehrnetzes mit den gleichen Nachteilen bezüglich Arbeits- und Zeitaufwand ist zum Beispiel aus der JP2000210003A bekannt.

Es wäre daher vorteilhaft, eine Vorrichtung und eine Anordnung zum Befestigen eines Vogelabwehrnetzes an einer Fläche, beispielsweise einer Wand oder einer Fassade bereitzustellen, die weniger arbeits- und zeitaufwendig zu handhaben sind.

### ZUSAMMENFASSUNG DER ERFINDUNG

Die vorliegende Erfindung ist definiert durch die Merkmale der unabhängigen Patentansprüche. Vorteilhafte Ausführungsformen der vorliegenden Erfindung gehen aus den abhängigen Patentansprüchen hervor.

Gemäß einem ersten Aspekt der vorliegenden Erfindung wird eine Vorrichtung zum Befestigen eines Vogelabwehrnetzes an einer Fläche bereitgestellt, wobei die Vorrichtung folgendes umfasst:
- ein schienenförmiges Tragelement, umfassend eine planare Befestigungsfläche und eine Vielzahl Hakenelemente,
- wobei die Hakenelemente über die Länge des Tragelementes im gleichen Abstand zueinander angeordnet sind,
- wobei die Innenflächen jedes Hakenelementes jeweils einen offenen Raum einfassen, an dessen Öffnung an einer Innenfläche ein Stoppanschlag ausgebildet ist, der die Öffnung des jeweiligen offenen Raums verengt, und
- wobei die das Ende des offenen Raums bildende Innenfläche jedes Hakenelementes jeweils mit einem Rahmenseil des Vogelabwehrnetzes in Eingriff zu bringen ist, und
- wobei das Tragelement zudem eine Vielzahl Stützelemente umfasst, die jeweils eine Auflagefläche aufweisen,
- wobei zwischen zwei benachbarten Hakenelementen jeweils ein Stützelement vorgesehen ist, und
- wobei auf der Auflagefläche jedes der Stützelemente das Rahmenseil in Auflage zu bringen ist.

Vorteilhafte Ausführungsformen des ersten Aspekts umfassen mindestens ein Merkmal aus der folgenden Liste:
- das schienenförmige Tragelement ist aus Polycarbonat hergestellt
- die Länge des schienenförmigen Tragelementes liegt im Bereich von 300 mm bis 600 mm, beispielsweise 500 mm
- jedes Hakenelement weist zwei Hakenteile auf
- in dem schienenförmigen Tragelemente ist eine Vielzahl Bohrungen ausgebildet, in denen Befestigungselemente aufnehmbar sind
- die Befestigungsfläche des schienenförmigen Tragelementes weist im Bereich jedes Hakenelementes eine Einbuchtung auf
- das schienenförmige Tragelement weist ein Richtelement in Form eines schienenförmigen Anschlags auf, das für ein exaktes Ausrichten des schienenförmigen Tragelementes von Vorteil ist
- das Richtelement weist eine weitere, alternative Befestigungsfläche auf
- die Vielzahl der Hakenelemente ist mit dem Tragelement einstückig ausgebildet
- die Vielzahl der Stützelemente ist mit dem Tragelement einstückig ausgebildet

Gemäß einem zweiten Aspekt der vorliegenden Erfindung wird eine Anordnung umfassend ein Vogelabwehrnetz und mindestens eine Vorrichtungen gemäß dem ersten Aspekt bereitgestellt.

Vorteilhafte Ausführungsformen des zweiten Aspekts umfassen mindestens ein Merkmal aus der folgenden Liste:
- die Anordnung umfasst mindestens zwei Vorrichtungen
- an mindestens zwei einander gegenüber liegenden Seiten des im aufgespannten Zustand rechteckigen Vogelabwehrnetzes ist jeweils das schienenförmige Tragelement der entsprechenden Vorrichtung positioniert
- das an der jeweils zugeordneten Netzkante des Vogelabwehrnetzes positionierte Rahmenseil ist entlang der Befestigungsfläche des jeweiligen schienenförmigen Tragelementes auf der Innenfläche, die das Ende des offenen Raums jedes Hakenelementes bildet, und auf jeder zwischen benachbarten Hakenelementen jeweils positionierten Auflagefläche des Stützelementes unter Spannung gehalten

Erhebliche Vorteile werden mittels der vorliegenden Erfindung erzielt. Insbesondere werden eine Vorrichtung und eine Anordnung zum Befestigen eines Vogelabwehrnetzes an einer Fläche, beispielsweise einer Wand oder einer Fassade bereitgestellt. Das schienenförmige Tragelement der erfindungsgemäßen Vorrichtung kann in besonders einfacher Weise an der Fläche aufgrund der einstückigen Bauweise befestigt werden. Ferner kann das Vogelabwehrnetz in einfacher Weise zwischen zwei einander gegenüberliegend positionierten Tragelementen zweier Vorrichtungen gespannt gehalten befestigt sein. Die Installation eines Vogelabwehrnetzes ist somit weniger arbeits- und zeitaufwendig zu handhaben. Die Länge der Vorrichtung kann, falls erforderlich, durch einen Nutzer auf eine gewünschte Länge gekürzt werden.

### KURZBESCHREIBUNG DER ERFINDUNG

Die erfindungsgemäße Vorrichtung und Anordnung zum Befestigen eines Vogelabwehrnetzes an einer Fläche, beispielsweise einer Wand oder einer Fassade werden nun unter Bezug auf die Zeichnungen erläutert. In diesen sind:
**Fig. 1** zeigt eine perspektivische Ansicht einer Vorrichtung zum Befestigen eines Vogelabwehrnetzes an einer Fläche gemäß mindestens einigen Ausführungsformen der vorliegenden Erfindung,
**Fig. 2** zeigt eine Schnittansicht einer Vorrichtung zum Befestigen eines Vogelabwehrnetzes an einer Fläche gemäß mindestens einigen Ausführungsformen der vorliegenden Erfindung,
**Fig. 3** zeigt eine perspektivische Ansicht einer Anordnung zum Befestigen eines Vogelabwehrnetzes an einer Fläche gemäß mindestens einigen Ausführungsformen der vorliegenden Erfindung,
**Fig. 4** zeigt eine Schnittansicht einer Anordnung zum Befestigen eines Vogelabwehrnetzes an einer Fläche gemäß mindestens einigen Ausführungsformen der vorliegenden Erfindung, und
**Fig. 5** zeigt eine Ansicht auf die Befestigungsfläche einer Vorrichtung enthalten in einer Anordnung zum Befestigen eines Vogelabwehrnetzes an einer Fläche gemäß mindestens einigen Ausführungsformen der vorliegenden Erfindung.

### AUSFÜHRUNGSFORMEN

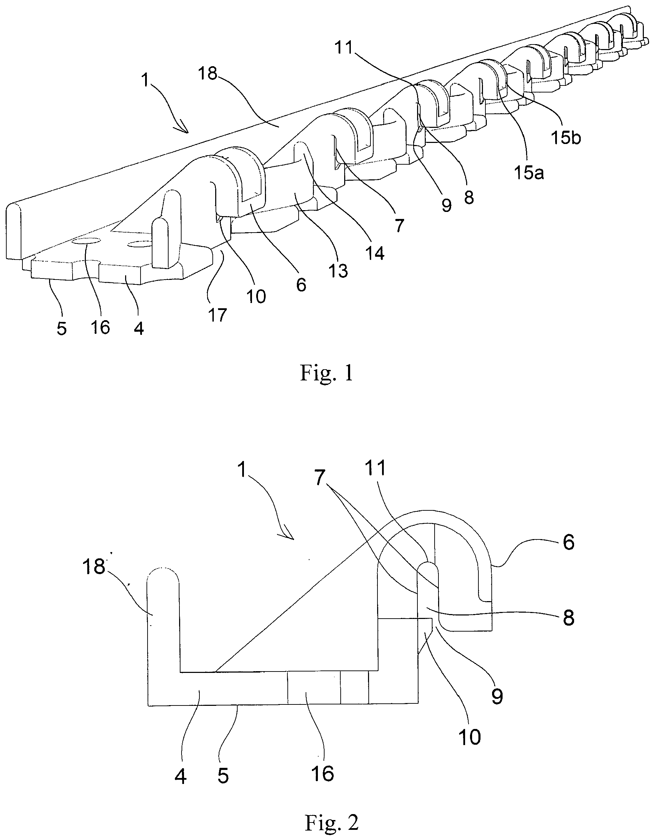

In **Fig. 1** ist eine perspektivische Ansicht einer Vorrichtung 1 zum Befestigen eines Vogelabwehrnetzes (nicht dargestellt) an einer Fläche gemäß mindestens einigen Ausführungsformen der vorliegenden Erfindung dargestellt. Die Fläche kann beispielsweise eine Wand oder eine Fassade (nicht dargestellt) sein. Die Vorrichtung 1 umfasst ein schienenförmiges Tragelement 4. Das schienenförmige Tragelement 4 ist beispielsweise aus Polycarbonat hergestellt. Die Länge des schienenförmigen Tragelementes 4 liegt vorzugsweise im Bereich zwischen 300 mm und 600 mm, beispielsweise beträgt die Länge 500 mm.

Das Tragelement 4 umfasst eine planare Befestigungsfläche 5. Die planare Befestigungsfläche 5 dient zum Anbringen der Vorrichtung 1 an eine ebene Fläche eines Objekts, beispielsweise an eine Wand oder eine Fassade (nicht dargestellt). In dem schienenförmigen Tragelement 4 kann eine Vielzahl Bohrungen 16 ausgebildet sein. Befestigungselemente (nicht dargestellt) sind in den Bohrungen aufnehmbar. Beispiele von Befestigungselementen sind Nägel, Schrauben, Nieten und dergleichen. Die Vorrichtung kann auch stattdessen oder zusätzlich durch Auftragen eines Klebstoffes auf die Befestigungsfläche 5 und durch Anpressen der Vorrichtung an die ebene Fläche des Objekts mit letzterem verbunden werden.

Das Tragelement 4 umfasst eine Vielzahl Hakenelemente 6. Die Hakenelemente 6 sind über die Länge des Tragelementes 4 im gleichen Abstand zueinander angeordnet. Die Innenflächen 7 jedes Hakenelementes 6 fassen jeweils einen offenen Raum 8 ein, an dessen Öffnung 9 an einer Innenfläche 7 ein Stoppanschlag 10 ausgebildet ist. Der Stoppanschlag 10 verengt die Öffnung 9 des jeweiligen offenen Raums 8. Die das Ende 11 des offenen Raums 8 bildende Innenfläche 7 jedes Hakenelementes 6 ist jeweils mit einem Rahmenseil (nicht dargestellt) des Vogelabwehrnetzes (nicht dargestellt) in Eingriff zu bringen. Die in diesem Absatz erwähnten Elemente 6-11 sind in Fig. 2 deutlich dargestellt. Jedes Hakenelement 6 kann eine Materialaussparung aufweisen, so dass zwei Hakenteile 15a, 15b gebildet werden.

Weiterhin umfasst das Tragelement 4 der in Fig. 1 dargestellten Vorrichtung 1 zudem eine Vielzahl Stützelemente 13. Die Stützelemente 13 weisen jeweils eine Auflagefläche 14 auf. Zwischen zwei benachbarten Hakenelementen 6 ist jeweils ein Stützelement 13 vorgesehen. Auf der Auflagefläche 14 jedes der Stützelemente 13 ist das Rahmenseil (nicht dargestellt) in Auflage zu bringen.

Ferner kann das schienenförmige Tragelement 4 ein Richtelement 18 in Form eines schienenförmigen Anschlags aufweisen. Durch Anlegen des Richtelements 18 an eine ebene Fläche kann die Vorrichtung 1 ausgerichtet werden. Das Richtelement 18 kann weiterhin eine weitere (alternative) Befestigungsfläche zum Befestigen der Vorrichtung 1 an einer Fläche, beispielsweise an einer Wand oder einer Fassade (nicht dargestellt), aufweisen. Bohrungen zur Aufnahme von Befestigungselementen können ebenfalls in der Befestigungsfläche des Richtelementes 18 vorgesehen sein.

In **Fig. 2** ist eine Schnittansicht einer Vorrichtung 1 zum Befestigen eines Vogelabwehrnetzes (nicht dargestellt) an einer Fläche gemäß mindestens einigen Ausfiihrungsformen der vorliegenden Erfindung dargestellt. Die Fläche kann beispielsweise eine Wand oder eine Fassade (nicht dargestellt) sein. Aus der Fig. 2 geht insbesondere eine beispielhafte Ausgestaltung eines Hakenelementes 6 hervor.

Die Innenflächen 7 des Hakenelementes 6 fassen einen offenen Raum 8 ein, an dessen Öffnung 9 an einer Innenfläche 7 ein Stoppanschlag 10 ausgebildet ist. Der Stoppanschlag 10 verengt die Öffnung 9 des jeweiligen offenen Raums 8. Der Stoppanschlag kann beispielsweise keilförmig ausgebildet sein, um ein Einführen eines Rahmenseils (nicht dargestellt) zu erleichtern und ein unbeabsichtigtes Herausrutschen des Rahmenseils zu verhindern oder zumindest zu erschweren. Die das Ende 11 des offenen Raums 8 bildende Innenfläche 7 des Hakenelementes 6 ist mit dem Rahmenseil des Vogelabwehrnetzes (nicht dargestellt) in Eingriff zu bringen.

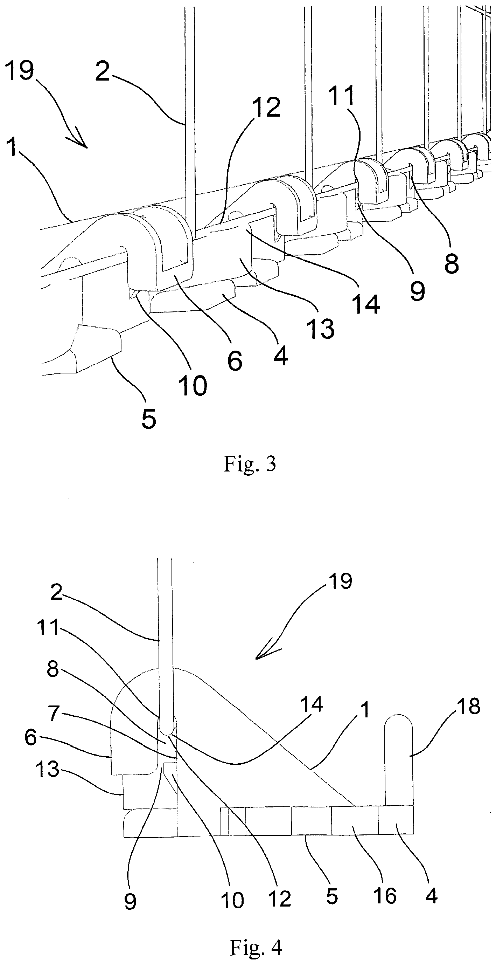

In **Fig. 3** ist eine perspektivische Ansicht einer Anordnung 19 zum Befestigen eines Vogelabwehrnetzes 2 an einer Fläche gemäß mindestens einigen Ausführungsformen der vorliegenden Erfindung dargestellt. Die Fläche kann beispielsweise eine Wand oder eine Fassade (nicht dargestellt) sein. Die Anordnung 19 umfasst ein Vogelabwehrnetz 2 und mindestens eine Vorrichtung 1 zum Befestigen des Vogelabwehrnetzes 2 an einer Wand oder einer Fassade. Eine beispielhafte Vorrichtung 1 ist in Fig. 1 näher beschrieben.

Aus Fig. 3 ist deutlich ersichtlich, dass das Rahmenseil 12 des Vogelabwehrnetzes 2 durch jeden der offenen Räume 8 der Hakenelemente 6 geführt ist und von den Hakenelementen 6 gehalten wird. Zudem ist dargestellt, dass das Rahmenseil 12 zwischen zwei benachbarten Hakenelementen 6 auf einer Auflagefläche 14 eines Stützelementes 13 angeordnet ist. Durch die sich abwechselnde Halterung und Stützung des Rahmenseiles 12 kann dieses in vorteilhafterweise mit der Vorrichtung 1 verbunden werden.

In **Fig. 4** ist eine Schnittansicht einer Anordnung 19 zum Befestigen eines Vogelabwehrnetzes 2 an einer Fläche gemäß mindestens einigen Ausführungsformen der vorliegenden Erfindung dargestellt. Die Fläche kann beispielsweise eine Wand oder eine Fassade (nicht dargestellt) sein. Aus der Fig. 4 geht insbesondere eine beispielhafte Ausgestaltung eines Hakenelementes 6 und eine beispielhafte Ausgestaltung des Stützelementes 13 sowie eine sich abwechselnde Halterung und Stützung des Rahmenseiles 12 hervor.

Die Innenflächen 7 des Hakenelementes 6 fassen einen offenen Raum 8 ein, an dessen Öffnung 9 an einer Innenfläche 7 ein Stoppanschlag 10 ausgebildet ist. Der Stoppanschlag 10 verengt die Öffnung 9 des jeweiligen offenen Raums 8. Der Stoppanschlag kann beispielsweise keilförmig ausgebildet sein, um ein Einführen des Rahmenseils 12 zu erleichtern und ein unbeabsichtigtes Herausrutschen des Rahmenseils 12 zu verhindern oder zumindest zu erschweren. Die das Ende 11 des offenen Raums 8 bildende Innenfläche 7 des Hakenelementes 6 ist mit dem Rahmenseil 12 des Vogelabwehrnetzes 2 in Eingriff zu bringen. In der Ebene hinter dem Hakenelement 6 ist ein Stützelement 13 mit einer Auflagefläche 14 gezeigt, auf der das Rahmenseil 12 angeordnet ist.

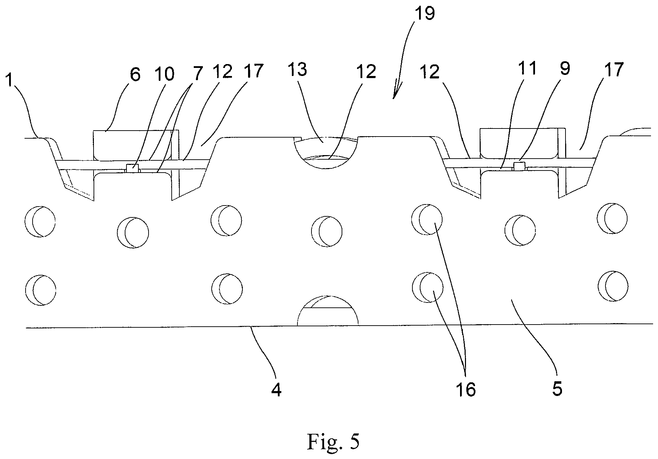

In **Fig. 5** ist eine Ansicht auf die Befestigungsfläche 5 einer Vorrichtung 1 enthalten in einer Anordnung 19 zum Befestigen eines Vogelabwehrnetzes an einer Fläche gemäß mindestens einigen Ausführungsformen der vorliegenden Erfindung dargestellt. Die Fläche kann beispielsweise eine Wand oder eine Fassade (nicht dargestellt) sein. Die Befestigungsfläche 5 des schienenförmigen Tragelementes 4 der Vorrichtung 1 weist im Bereich jedes Hakenelementes 6 eine Einbuchtung 17 auf. Zwischen den beiden dargestellten Hakenelementen 6 ist ein Stützelement 13 angeordnet. Wie bereits oben beschrieben, wird das Rahmenseil 12 abwechselnd von einem Hakenelement 6 gehaltert und von einem Stützelement 13 gestützt.

Die planare Befestigungsfläche 5 des schienenförmigen Tragelementes 4 der Vorrichtung 1 weist eine Vielzahl Bohrungen 16 zum Anbringen der Vorrichtung 1 an eine Fläche auf.

### LISTE DER BEZUGSZEICHEN

- 1: Vorrichtung
- 2: Vogelabwehrnetz
- 4: schienenförmiges Tragelement
- 5: Befestigungsfläche
- 6: Hakenelement
- 7: Innenfläche
- 8: offener Raum
- 9: Öffnung
- 10: Stoppanschlag
- 11: Ende
- 12: Rahmenseil
- 13: Stützelement
- 14: Auflagefläche
- 15a: Hakenteil
- 15b: Hakenteil
- 16: Bohrung
- 17: Einbuchtung
- 18: Richtelement
- 19: Anordnung

## Patentansprüche

1. Vorrichtung (1) zum Befestigen eines Vogelabwehrnetzes an einer Fläche, umfassend :
- ein schienenförmiges Tragelement (4), umfassend eine plane Befestigungsfläche (5) und eine Vielzahl Hakenelemente (6),
- wobei die Hakenelemente (6) über die Länge des Tragelementes (4) im gleichen Abstand zueinander angeordnet sind,
- wobei die Innenflächen (7) jedes Hakenelementes (6) jeweils einen offenen Raum (8) einfassen, an dessen Öffnung (9) an einer Innenfläche (7) ein Stoppanschlag (10) ausgebildet ist, der die Öffnung (9) des jeweiligen offenen Raums (8) verengt, und
- wobei die das Ende (11) des offenen Raums (8) bildende Innenfläche (7) jedes Hakenelementes (6) jeweils mit einem Rahmenseil (12) des Vogelabwehrnetzes (2) in Eingriff zu bringen ist, **dadurch gekennzeichnet, dass**
das Tragelement (4) zudem eine Vielzahl Stützelemente (13) umfasst, die jeweils eine Auflagefläche (14) aufweisen,
- wobei zwischen zwei benachbarten Hakenelementen (6) jeweils ein Stützelement (13) vorgesehen ist, und
- wobei auf der Auflagefläche (14) jedes der Stützelemente (13) das Rahmenseil (12) in Auflage zu bringen ist.

2. Vorrichtung (1) nach Anspruch 1, **dadurch gekennzeichnet, dass** das schienenförmige Tragelement (4) aus Polycarbonat hergestellt ist.

3. Vorrichtung (1) nach Anspruch 1 und 2, **dadurch gekennzeichnet, dass** die Länge des schienenförmigen Tragelementes (4) im Bereich von 300 mm bis 600 mm liegt.

4. Vorrichtung (1) nach Anspruch 3, **dadurch gekennzeichnet, dass** die Länge des schienenförmigen Tragelementes (4) 500 mm beträgt.

5. Vorrichtung (1) nach einem der Ansprüche 1-4, **dadurch gekennzeichnet, dass** jedes Hakenelement (6) zwei Hakenteile (15a, 15b) aufweist.

6. Vorrichtung (1) nach jedem der Ansprüche 1-5, **dadurch gekennzeichnet, dass** in dem schienenförmigen Tragelemente (4) eine Vielzahl Bohrungen (16) ausgebildet ist, in denen Befestigungselemente aufnehmbar sind.

7. Vorrichtung (1) nach jedem der Ansprüche 1-6, **dadurch gekennzeichnet, dass** die Befestigungsfläche (5) des schienenförmigen Tragelementes (4) im Bereich jedes Hakenelementes (6) eine Einbuchtung (17) aufweist

8. Vorrichtung (1) nach jedem der Ansprüche 1-7, **dadurch gekennzeichnet, dass** das schienenförmige Tragelement (4) ein Richtelement (18) in Form eines schienenförmigen Anschlags aufweist.

9. Vorrichtung (1) nach jedem der Ansprüche 1-8, **dadurch gekennzeichnet, dass** die Vielzahl der Hakenelemente (6) mit dem Tragelement (4) einstückig ausgebildet ist.

10. Vorrichtung (1) nach jedem der Ansprüche 1-9, **dadurch gekennzeichnet, dass** die Vielzahl der Stützelemente (13) mit dem Tragelement (4) einstückig ausgebildet ist.

11. Anordnung (19) umfassend ein Vogelabwehrnetz (2) und mindestens eine Vorrichtung (1) gemäß einem der Ansprüche 1-10.

12. Anordnung (19) nach Anspruch 11, wobei die Anordnung mindestens zwei Vorrichtungen (1) umfasst.

13. Anordnung (19) nach Anspruch 12, wobei an mindestens zwei einander gegenüberliegenden Seiten des im aufgespannten Zustand rechteckigen Vogelabwehrnetzes (2) jeweils das schienenförmige Tragelement (4) der entsprechenden Vorrichtung (1) positioniert ist.

14. Anordnung (19) nach Anspruch 13, **dadurch gekennzeichnet, dass** das an der jeweils zugeordneten Netzkante des Vogelabwehrnetzes (2) positionierte Rahmenseil (12) entlang der Befestigungsfläche (5) des jeweiligen schienenförmigen Tragelementes (4) auf der Innenfläche (7), die das Ende (11) des offenen Raums (8) jedes Hakenelementes (6) bildet, und auf jeder zwischen benachbarten Hakenelementen (6) jeweils positionierten Auflagefläche (14) des Stützelementes (13) unter Spannung gehalten ist.

## Claims

1. A device (1) for fastening a bird control net to a surface, comprising:
- a rail-shaped carrier element (4), comprising a planar fastening surface (5) and a plurality of hook elements (6),
- the hook elements (6) being arranged over the length of the carrier element (4) at an equal distance from one another,
- the inner faces (7) of each hook element (6) each enclosing an open space (8), at the opening (9) of which, on an inner face (7), a stop (10) is formed, which narrows the opening (9) in the relevant open space (8), and
- the inner face (7) of each hook element (6) that forms the end (11) of the open space (8) being able to be brought into engagement with a frame cable (12) of the bird control net (2), **characterized in that**
the carrier element (4) also comprises a plurality of support elements (13), which each comprise a contact surface (14),
- one support element (13) being provided between two adjacent hook elements (6), and
- the frame cable (12) being able to be brought into contact with the contact surface (14) of each of the support elements (13).

2. The device (1) according to claim 1, **characterized in that** the rail-shaped carrier element (4) is made of polycarbonate.

3. The device (1) according to claim 1 and 2, **characterized in that** the length of the rail-shaped carrier element (4) is in the range of 300 mm to 600 mm.

4. The device (1) according to claim 3, **characterized in that** the length of the rail-shaped carrier element (4) is 500 mm.

5. The device (1) according to any of claims 1-4, **characterized in that** each hook element (6) comprises two hook parts (15a, 15b).

6. The device (1) according to each of claims 1-5, **characterized in that** a plurality of holes (16) are made in the rail-shaped carrier element (4), in which holes fastening elements can be received.

7. The device (1) according to each of claims 1-6, **characterized in that** the fastening surface (5) of the rail-shaped carrier element (4) comprises an indentation (17) in the region of each hook element (6).

8. The device (1) according to each of claims 1-7, **characterized in that** the rail-shaped carrier element (4) comprises an alignment element (18) in the form of a rail-shaped stop.

9. The device (1) according to each of claims 1-8, **characterized in that** the plurality of hook elements (6) are formed in one piece with the carrier element (4).

10. The device (1) according to each of claims 1-9, **characterized in that** the plurality of support elements (13) are formed in one piece with the carrier element (4).

11. An assembly (19) comprising a bird control net (2) and at least one device (1) according to any of claims 1-10.

12. The assembly (19) according to claim 11, wherein the assembly comprises at least two devices (1).

13. The assembly (19) according to claim 12, wherein the rail-shaped carrier element (4) of the corresponding device (1) is positioned on at least two opposite sides of the bird control net (2), which is rectangular when it is stretched out, in each case.

14. The assembly (19) according to claim 13, **characterized in that** the frame cable (12) positioned on the associated net edge of the bird control net (2) is held under tension along the fastening surface (5) of the relevant rail-shaped carrier element (4) on the inner face (7), which forms the end (11) of the open space (8) in each hook element (6), and on each contact surface (14) of the support element (13), which is positioned between adjacent hook elements (6) in each case.

## Revendications

1. Dispositif (1) pour la fixation d'un filet anti-oiseaux sur une surface, comprenant :
- un élément de support (4) en forme de rail, comprenant une surface de fixation (5) plane et une pluralité d'éléments crochets (6),
- les éléments crochets (6) étant disposés à même distance les uns des autres sur la longueur de l'élément de support (4),
- les surfaces intérieures (7) de chaque élément crochet (6) entourant chacune un espace ouvert (8), au niveau de l'ouverture (9) duquel est formée une butée d'arrêt (10) sur une surface intérieure (7), qui rétrécit l'ouverture (9) de l'espace ouvert (8) respectif, et
- la surface intérieure (7) de chaque élément crochet (6) formant l'extrémité (11) de l'espace ouvert (8) devant être mise en prise avec un câble de cadre (12) du filet anti-oiseaux (2), **caractérisé en ce que**
l'élément de support (4) comprend en outre une pluralité d'éléments de soutien (13), dont chacun présente une surface d'appui (14),
- un élément de soutien (13) étant prévu entre deux éléments crochets (6) adjacents, et
- le câble de cadre (12) devant être mis en appui sur la surface d'appui (14) de chacun des éléments de soutien (13).

2. Dispositif (1) selon la revendication 1, **caractérisé en ce que** l'élément de support (4) en forme de rail est fabriqué en polycarbonate.

3. Dispositif (1) selon les revendications 1 et 2, **caractérisé en ce que** la longueur de l'élément de support (4) en forme de rail se situe dans la plage de 300 mm à 600 mm.

4. Dispositif (1) selon la revendication 3, **caractérisé en ce que** la longueur de l'élément de support (4) en forme de rail est de 500 mm.

5. Dispositif (1) selon l'une des revendications 1 à 4, **caractérisé en ce que** chaque élément crochet (6) comprend deux parties de crochet (15a, 15b).

6. Dispositif (1) selon chacune des revendications 1 à 5, **caractérisé en ce qu'**une pluralité d'alésages (16) sont formés dans les éléments de support (4) en forme de rail, dans lesquels des éléments de fixation peuvent être reçus.

7. Dispositif (1) selon chacune des revendications 1 à 6, **caractérisé en ce que** la surface de fixation (5) de l'élément de support (4) en forme de rail présente une échancrure (17) dans la zone de chaque élément crochet (6).

8. Dispositif (1) selon chacune des revendications 1 à 7, **caractérisé en ce que** l'élément de support (4) en forme de rail présente un élément d'alignement (18) sous la forme d'une butée en forme de rail.

9. Dispositif (1) selon chacune des revendications 1 à 8, **caractérisé en ce que** la pluralité d'éléments crochets (6) est formée d'un seul tenant avec l'élément de support (4).

10. Dispositif (1) selon chacune des revendications 1 à 9, **caractérisé en ce que** la pluralité d'éléments de soutien (13) est formée d'un seul tenant avec l'élément de support (4).

11. Agencement (19) comprenant un filet anti-oiseaux (2) et au moins un dispositif (1) selon l'une des revendications 1 à 10.

12. Agencement (19) selon la revendication 11, l'agencement comprenant au moins deux dispositifs (1).

13. Agencement (19) selon la revendication 12, dans lequel l'élément de support (4) en forme de rail du dispositif (1) correspondant est positionné sur au moins deux côtés opposés du filet anti-oiseaux (2) rectangulaire à l'état tendu.

14. Agencement (19) selon la revendication 13, **caractérisé en ce que** le câble de cadre (12) positionné sur le bord de filet respectivement associé du filet anti-oiseaux (2) est maintenu sous tension le long de la surface de fixation (5) de l'élément de support (4) en forme de rail respectif sur la surface intérieure (7), qui forme l'extrémité (11) de l'espace ouvert (8) de chaque élément crochet (6), et sur chaque surface d'appui (14) de l'élément de soutien (13) positionnée respectivement entre des éléments crochets (6) adjacents.
